Europäisches Patentamt

European Patent Office

Office européen des brevets

(19)

(11) **EP 0 800 644 B1**

(12) **FASCICULE DE BREVET EUROPEEN**

(45) Date de publication et mention
de la délivrance du brevet:
**02.09.1998 Bulletin 1998/36**

(21) Numéro de dépôt: **95941072.1**

(22) Date de dépôt: **06.12.1995**

(51) Int Cl.⁶: **G01K 7/25**

(86) Numéro de dépôt international:
**PCT/EP95/04794**

(87) Numéro de publication internationale:
**WO 96/20394 (04.07.1996 Gazette 1996/30)**

(54) **PROCEDE DE MESURE DE LA TEMPERATURE A L'AIDE D'UN CAPTEUR A COEFFICIENT DE TEMPERATURE NEGATIF ET DISPOSITIF CORRESPONDANT**

**TEMPERATURMESSVERFAHREN MIT EINEM NTC-FÜHLER UND ENTSPRECHENDE ANORDNUNG**

**TEMPERATURE SENSING METHOD USING A NEGATIVE TEMPERATURE COEFFICIENT SENSOR AND DEVICE THEREFORE**

(84) Etats contractants désignés:
**DE ES GB IT**

(30) Priorité: **26.12.1994 FR 9415738**

(43) Date de publication de la demande:
**15.10.1997 Bulletin 1997/42**

(73) Titulaire: **SIEMENS AUTOMOTIVE S.A.**
**31036 Toulouse Cédex (FR)**

(72) Inventeur: **TORNARE, Jean, Marc**
**F-47000 AGEN (FR)**

(74) Mandataire: **Epping, Wilhelm, Dr.-Ing. et al**
**Patentanwalt**
**Postfach 22 13 17**
**80503 München (DE)**

(56) Documents cités:
**EP-A- 0 108 325       EP-A- 0 203 350**

## Description

La présente invention concerne un procédé de mesure de la température à l'aide d'un capteur à coefficient de température négatif. Plus particulièrement un tel procédé est destiné à être employé dans le domaine de l'électronique automobile.

Il est déjà connu d'utiliser des capteurs dont la résistance varie en fonction de la température du milieu dans lequel ils sont plongés. En mesurant cette variation de résistance et après traitement du signal de mesure, on détermine une valeur numérique N représentative de la température régnant autour du capteur.

De manière classique en ce qui concerne les capteurs de température à coefficient de température négatif (encore appelé capteurs CTN), on soumet à une source de tension Va un capteur et une résistance montée en série (dite résistance de "pull up") et reliée au pôle positif de la source de tension. Un signal analogique de mesure, pris en un point milieu, situé entre la résistance et le capteur, est envoyé vers un convertisseur analogique / numérique. Ce convertisseur reçoit également une tension de référence, de manière à générer une valeur numérique N représentative de la température mesurée par le capteur.

De tels dispositifs présentent cependant un inconvénient majeur, à savoir: il leur est difficile de mesurer avec une grande précision une température variant sur une plage étendue.

Pour pallier cet inconvénient, il est connu de commuter la tension de référence du convertisseur entre plusieurs tensions de référence distinctes. A chaque tension de référence correspond une plage de température mesurée. On obtient ainsi plusieurs échelles de mesure, pour suivre avec précision, une température variant sur une large étendue. Par exemple, dans le domaine de l'automobile, la température à mesurer peut varier de - 40° à + 140°C.

L'inconvénient de tels dispositifs à tensions de référence multiple est qu'il faut fournir au convertisseur, plusieurs sources de tension étalonnées avec précision. Une telle multiplicité des sources de tension étalonnées est onéreuse.

On cherche donc à créer un procédé de mesure de la température ne mettant en oeuvre qu'une seule source de tension, tout en garantissant une bonne précision de la mesure sur toute l'étendue de la plage de température.

Il est déjà connu, par exemple du document EP 0203350, de faire varier la résistance montée en série avec le capteur ( par commutation d'un transistor monté en parallèle avec cette résistance), pour améliorer le suivi de la température selon différentes échelles de température. Cependant cette technique présente l'inconvénient de faire varier le courant passant à l'intérieur de la branche de mesure, et surtout elle introduit des erreurs provenant des tensions de déchets et des courants de fuite des transistors.

Le but de la présente invention est donc d'utiliser une seule tension de référence, mais de déterminer avec précision les erreurs dues à la présence des transistors dans l'étage de traitement du signal, pour en tenir compte et les éliminer.

A cet effet la présente invention concerne un procédé de mesure de la température à l'aide d'un capteur à coefficient de température négatif, le dit capteur comportant une résistance interne variable et étant associé à un étage de traitement du signal comportant au moins un transistor monté en parallèle avec au moins une résistance dite de "pull up", une tension prise en un point milieu entre le capteur et les résistances de "pull up" est lue sur une entrée analogique d'un convertisseur analogique / numérique, procédé selon lequel on commande le transistor selon une tension dite carrée de telle sorte que le transistor soit alternativement et de façon régulière en position conducteur, puis en position bloquée, et on mesure la valeur de la tension à l'entrée analogique du convertisseur lorsque le transistor est conducteur et lorsque le transistor est bloqué, le dit procédé étant caractérisé en ce qu'il consiste à:

- déterminer à partir de ces deux valeurs mesurées la tension de saturation du transistor,
- en déduire la valeur de la tension corrigée arrivant à l'entrée analogique du convertisseur et déduire de cette tension corrigée la température régnant autour du capteur.

Ainsi, en mesurant la tension à l'entrée du convertisseur lorsque le transistor en parallèle avec la résistance de "pull up" est à l'état conducteur et à l'état bloqué, on détermine la tension de saturation du transistor. La tension mesurée à l'entrée du convertisseur est alors corrigée en tenant compte de la tension de saturation du transistor. De ce fait il est possible en utilisant une seule source de tension d'avoir plusieurs gammes de mesures. La commutation d'une gamme à une autre se fait à l'aide de transistors montés en parallèle sur une résistance de "pull up", sans perturber la mesure puisque la tension de saturation de chaque transistor commutée est connue. En tenant compte de cette tension de saturation les mesures effectuées ne sont plus entachées d'erreurs dues à la présence des transistors

En outre la détermination de cette tension de saturation peut être effectuée en continu. Dans ce cas le procédé selon l'invention est un procédé d'apprentissage de la tension de saturation des transistors montés en parallèles avec une résistance de "pull up"

Avantageusement, la valeur de la tension de saturation est filtrée avant d'être utilisée dans le calcul de la température régnant autour du capteur.

Lorsque la tension de saturation a été déterminée, la valeur de la tension entre les résistances de "pull up" et le capteur est alors obtenue avec une grande précision et de manière indépendante de la tension de saturation du tran-

sistor.

La présente invention concerne également un dispositif de mesure de la température mettant en oeuvre le procédé ci dessus indiqué.

D'autres objets, caractéristiques et avantages de la présente invention ressortiront d'ailleurs de la description qui suit, à titre d'exemple non limitatif, et en référence aux dessins annexés, dans lesquels:

- La figure 1 est une vue schématique représentant un dispositif de mesure de température mettant en oeuvre le procédé selon la présente invention et,
- La figure 2 est une vue schématique analogue à la figure 1, montrant un cas ou plus de deux gammes de température sont utilisées.

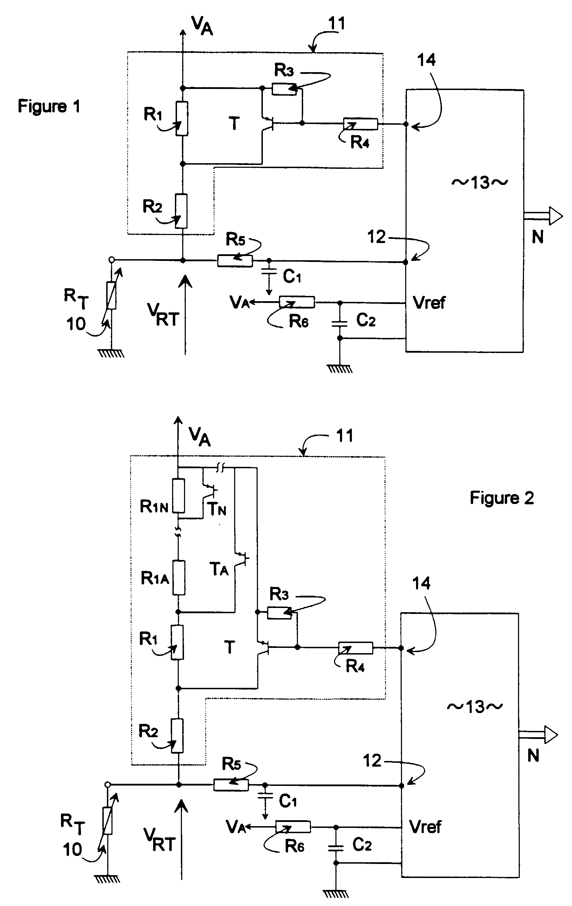

Selon la forme de réalisation représentée à la figure 1, un capteur de mesure de la température 10 est associé à un étage 11 de traitement du signal de sortie du capteur. Ce signal traité est ensuite transmis à l'entrée analogique 12 d'un convertisseur analogique / numérique 13. Le capteur 10 utilisé, dans le cadre du mode de réalisation représenté a une résistance interne $R_T$ qui varie avec la température du milieu dans lequel elle est plongée. Plus la température du milieu augmente et plus la résistance $R_T$ du capteur diminue. Un tel capteur est appelé capteur à coefficient de température négatif.

De manière classique le convertisseur 13 est alimenté par une tension de référence $V_{ref}$, filtrée de manière connue, par un filtre $R_6$, $C_2$.

De même on notera que la tension $V_{RT}$ recueillie aux bornes de la résistance du capteur est filtrée de manière connue par un filtre $R_5$, $C_1$.

L'étage de traitement 11 du signal capteur est constitué, dans l'exemple représenté, par deux résistances dites de "pull up" $R_1$ et $R_2$. Ces deux résistances sont montées en série et sont soumises à la tension d'alimentation $V_A$. La résistance $R_1$ présente un transistor T monté en parallèle avec elle. Ce transistor est d'autre part associé à deux résistances $R_3$ et $R_4$. Ces résistances $R_3$ et $R_4$ améliorent de manière classique, la commutation du transistor T.

Le convertisseur 13 présente une sortie 14, adaptée pour commander le transistor T. Dans l'exemple représenté, cette sortie 14 envoie vers le transistor T un signal sensiblement carré. De ce fait, pendant une alternance de ce signal, le transistor T est à l'état conducteur et pendant l'alternance suivante le transistor T est à l'état bloqué.

Lorsque le transistor est bloqué les deux résistances $R_1$ et $R_2$ sont en série avec la résistance $R_T$ du capteur. Lorsque le transitor T est conducteur seule la résistance $R_2$ est en série avec la résistance du capteur. De ce fait deux gammes de mesure de la température sont possibles.

Le déroulement du procédé et le fonctionnement du dispositif selon l'invention sont décrits ci - après.

Dans un premier temps on réalise la détermination, de la tension de saturation du transistor T. Pour ce faire, un signal de commande de forme sensiblement carrée est envoyé au transistor T. Lorsque le transistor est bloqué on mesure la tension $V_{RT}$ arrivant à l'entrée 12 du convertisseur 13. La valeur $N_0$ de cette tension, telle que mesurée par le convertisseur est la suivante:

$$N_0 = 1023 \times \frac{R_T}{R_T + R_1 + R_2} \qquad \text{1)}$$

Dans cette formule 1023 est une constante correspondant à la dynamique du convertisseur.

Lorsque le transistor T est conducteur on mesure la tension $V_{RT}$ à l'entrée 12 du convertisseur. La valeur $N_1$ de cette tension est la suivante:

$$N_1 = \frac{R_T}{R_T + R_2} \times \frac{[V_A - V_{CE}]}{V_A} \times 1023 \qquad \text{2)}$$

Dans laquelle $V_{CE}$ est la tension de saturation du transistor T et $V_A$ la tension d'alimentation de la branche de mesure contenant les résistances de "pull up" $R_1$ et $R_2$. A partir de ces deux équations (1 et 2) on obtient:

$$R_T = \frac{R_1 + R_2}{1023 - N_0} \times N_0 \qquad \text{3)}$$

et,

$$V_{CEcorr} = \frac{[V_A - V_{CE}]}{V_A} = \frac{1023 \times R_2 + N_0 \times R_1}{[R_1 + R_2] \times 1023} \times \frac{N_1}{N_0} \qquad 4)$$

La tension de saturation du transistor T est ainsi directement définie à partir des valeurs $N_0$ et $N_1$. Toutes les variables de cette dernière équation sont connues. Il est donc facile de déterminer la tension de saturation $V_{CEcorr}$.

Dans un second temps la tension de saturation mesurée est filtrée à l'aide d'un filtre numérique de façon à améliorer la résolution de la mesure. A cet effet on considère que $V_{CEcorr}$ à l'instant n est défini par rapport à la valeur de $V_{CEcorr}$ à l'instant n-1 selon la relation ci - après:

$$V_{CEcorr}(n) = V_{CEcorr}(n\text{-}1) + \frac{V_{CEcorr}(n) - V_{CEcorr}(n\text{-}1)}{10} \qquad 5)$$

Dans un troisième temps on calcule la valeur de $N_1$ corrigée en tenant compte de la tension de saturation. Cette valeur $N_1$ corrigée est appelée $N_{1corr}$. On a la relation suivante:

$$N_{1\,corr} = \frac{N_1}{V_{CEcorr}(n)} \qquad 6)$$

De ce fait les valeurs de $N_1$ et $N_0$ corrigées s'expriment de manière totalement indépendante de $V_{CE}$.
En effet en appliquant la relation (6) on obtient:

$$N_{1\,corr} = \frac{R_T}{R_T + R_1} \times 1023 \qquad 7)$$

et

$$N_0 = \frac{R_T}{R_T + R_1 + R_2} \times 1023 \qquad 8)$$

Ces deux valeurs sont directement exploitables pour la détermination de la température régnant autour du capteur de température.

On notera que grâce au procédé selon l'invention la détermination de la température du milieu dans lequel est plongé le capteur est indépendante de la tension de saturation du transistor T. De ce fait il est maintenant possible de n'utiliser qu'une seule tension de référence pour le convertisseur, tout en disposant de plusieurs gammes de mesure de la température (deux dans l'exemple représenté à la figure 1). En outre pour réaliser un dispositif mettant en oeuvre le procédé selon l'invention il n'est pas nécessaire d'équiper le convertisseur d'une entrée analogique complémentaire.

Comme le montre la figure 2, il est possible de généraliser le procédé ci -dessus indiqué au cas ou plus de deux gammes de température sont utilisées. Dans ce cas il suffit d'ajouter autant de résistances de "pull up" supplémentaires, que l'on désire de gammes de température supplémentaires. Dans l'exemple représenté à la figure 2 on a rajouté une résistance de "pull up" supplémentaire $R_{1A}$. Cette résistance supplémentaire $R_{1A}$ est alors associée à un transistor $T_A$, comme précédemment indiqué. Le même procédé que celui évoqué dans le cadre de la figure 1 est alors appliqué à ce second transistor $T_A$ pour en déterminer la tension de saturation. Sur la figure 2 le schéma du circuit associé à ce second transistor $T_A$ n'a été qu'ébauché pour ne pas surcharger les dessins.

On conçoit facilement que chaque fois qu'il est nécessaire d'augmenter le nombre de gammes de température, il suffit de rajouter une résistance de "pull up" $R_{1N}$ associée à un transistor $T_N$. Chaque unité constituée par cette résistance $R_{1N}$ et ce transistor $T_N$ fonctionne de la même manière que la résistance $R_1$ associée au transistor T.

Il est à noter que bien qu'il soit préférable et avantageux de réaliser l'étape de filtrage numérique précédemment décrite, cette étape n'est cependant pas obligatoire. En effet le but de cette étape est d'augmenter la résolution de mesure de $V_{CE}$. Dans le cas où l'on effectue pas un tel filtrage, on dégrade dirctement la résolution de mesure du VCE mesuré et donc la résolution de $N_{1corr}$.

Le procédé et le dispositif précédemment décrits peuvent être mis en oeuvre de manière continue. Dans ce cas, il est possible de réaliser un suivi de l'évolution de la tension de saturation du transistor pendant toute la durée de son fonctionnement. Un tel procédé est ainsi un procédé d'apprentissage automatique de la tension de saturation d'un transistor. Ce procédé d'apprentissage permet de prendre en compte des variations de la tension de saturation dues à la vétusté du transistor et / ou à la température de ce transistor et / ou à ces conditions d'utilisation ... etc.

**Revendications**

1. Procédé de mesure de la température à l'aide d'un capteur (10) à coefficient de température négatif, le dit capteur comportant une résistance interne variable ($R_T$) et étant associé à un étage de traitement (11) du signal comportant au moins un transistor (T), monté en parallèle avec au moins une résistance ($R_1$, $R_{1A}$, ...$R_{1N}$) dite de "pull up", une valeur de tension ($N_0$, $N_1$) prise en un point milieu entre la résistance ($R_T$) et les résistances de "pull up" est lue sur une entrée analogique (12) d'un convertisseur analogique / numérique (13), procédé selon lequel on commande le transistor (T) selon une tension dite carrée de telle sorte que le transistor soit alternativement et de façon régulière en position conducteur, puis en position bloquée, et on mesure la valeur de la tension ($N_0$, $N_1$) à l'entrée analogique (12) du convertisseur (13) lorsque le transistor (T) est conducteur et lorsque le transistor est bloqué, le dit procédé étant caractérisé en ce qu'il consiste à:

   - déterminer à partir de ces deux mesures la tension de saturation ($V_{CE}$) du transistor,
   - en déduire la valeur de la tension corrigée ($N_{0corr}$, $N_{1corr}$) et en déduire la température régnant autour du capteur (10).

2. Procédé selon la revendication 1, caractérisé en ce qu'il consiste en outre à:

   - filtrer la valeur de la tension de saturation ($V_{CE}$) du transistor avant de l'utiliser pour le calcul de la température.

3. Procédé selon la revendication 1 ou 2, caractérisé en ce qu'il consiste à:

   - déterminer en continu la tension de saturation ($V_{CE}$) du transistor.

4. Procédé selon la revendication 3, caractérisé en ce qu'il consiste à suivre l'évolution de la tension de saturation du transistor, pendant toute la durée de fonctionnement de ce transistor.

5. Dispositif de mesure de la température mettant en oeuvre le procédé selon l'une des revendications 1 à 4 et ayant un capteur de température (10) à coefficient de température négatif, le dit dispositif comportant:

   - au moins deux résistances en série ($R_1$, $R_{1A}$, ...$R_{1N}$) avec la résistance ($R_T$) du capteur,
   - un transistor (T) placé en parallèle avec l'une des deux résistances, de telle sorte que lorsque le transistor est bloqué les deux résistances soient en série avec la résistance du capteur, et lorsque le transistor est conducteur, seule, une des deux résistances est en série avec la résistance du capteur et,
   - le convertisseur (13), recevant sur son entrée analogique (12) la valeur de la tension ($N_0$, $N_1$) prise entre les résistances ($R_1$, $R_{1A}$, ...$R_{1N}$) et la résistance ($R_T$) du capteur, le dit convertisseur étant adapté pour mesurer cette tension lorsque le transistor est bloqué et lorsque le transistor est conducteur, pour en déduire la tension de saturation ($V_{CE}$) du transistor et pour tenir compte de cette tension de saturation pour déterminer la température régnant autour dudit capteur.

6. Dispositif de mesure de la température selon la revendication 5, caractérisé en ce qu'il présente au moins deux gammes de mesure de la température et utilise une seule tension de référence (Vref).

7. Dispositif selon la revendication 5 ou 6, caractérisé en ce qu'il comporte une pluralité de transistors (T, $T_A$, ... $T_N$) chacun placé en parallèle avec une des résistances ($R_1$, $R_{1A}$, ...$R_{1N}$) de la pluralité de résistance de "pull up", de telle sorte qu'il comporte une pluralité de gammes de mesure de la température et qu'il soit adapté pour déterminer les tensions de saturation ($V_{CE}$) de chacun des dits transistors (T, $T_A$, ... $T_N$).

**Patentansprüche**

1. Verfahren zum Messen der Temperatur mit Hilfe eines Meßaufnehmers (10) mit negativem Temperaturkoeffizienten, wobei der Meßaufnehmer einen veränderlichen inneren Widerstand ($R_T$) aufweist und einer Signalaufbereitungsstufe (11) mit mindestens einem Transistor (T) zugeordnet ist, der mit mindestens einem sogenannten Pull-

up-Widerstand ($R_1$, $R_{1A}$, ... $R_{1N}$) parallel geschaltet ist, wobei ein Spannungswert ($N_0$, $N_1$), der an einem Punkt zwischen dem Widerstand ($R_T$) und den Pull-up-Widerständen abgegriffen wird, in einen analogen Eingang (12) eines Analog/Digital-Wandlers (13) eingegeben wird, bei welchem Verfahren der Transistor (T) entsprechend einer Rechteckspannung so gesteuert wird, daß der Transistor abwechselnd und regelmäßig in den leitenden Zustand und dann wieder in den sperrenden Zustand geschaltet wird, und der Wert der Spannung ($N_0$, $N_1$) am analogen Eingang (12) des Wandlers (13) gemessen wird, wenn der Transistor (T) leitend und wenn der Transistor gesperrt ist, wobei das Verfahren dadurch gekennzeichnet ist, daß es die folgenden Schritte umfaßt:

- ausgehend von den beiden Messungen wird die Sättigungsspannung ($V_{CE}$) des Transistors bestimmt,
- hieraus wird der korrigierte Spannungswert ($N_{0corr}$, $N_{1corr}$) abgeleitet und hieraus wird die im Bereich des Meßaufnehmers (10) herrschende Temperatur abgeleitet.

**2.** Verfahren nach Anspruch 1, dadurch gekennzeichnet, daß es ferner den folgenden Schritt umfaßt:

- der Wert der Sättigungsspannung ($V_{CE}$) des Transistors wird gefiltert, bevor er zum Berechnen der Temperatur verwendet wird.

**3.** Verfahren nach Anspruch 1 oder 2, dadurch gekennzeichnet, daß es folgenden Schritt umfaßt:

- die Sättigungsspannung ($V_{CE}$) des Transistors wird kontinuierlich bestimmt.

**4.** Verfahren nach Anspruch 3, dadurch gekennzeichnet, daß dem Verlauf der Sättigungsspannung des Transistors während der gesamten Betriebsdauer des Transistors gefolgt wird.

**5.** Temperaturmeßvorrichtung zum Durchführen des Verfahrens nach einem der Ansprüche 1 bis 4, mit einem Temperaturaufnehmer (10) mit negativem Temperaturkoeffizienten, wobei die Vorrichtung aufweist:

- mindestens zwei Widerständen ($R_1$, $R_{1A}$, ... $R_{1N}$), die mit dem Widerstand ($R_T$) des Aufnehmers in Reihe geschaltet sind,
- einen Transistor (T), der mit den beiden Widerständen parallel geschaltet ist, derart, daß im Sperrzustand des Transistors die beiden Widerstände mit dem Widerstand des Aufnehmers in Reihe geschaltet sind und im Leitzustand des Transistors nur einer der beiden Widerstände mit dem Widerstand des Aufnehmers in Reihe geschaltet ist,
- wobei der Wandler (13) an seinem analogen Eingang (12) den Wert der zwischen den Widerständen ($R_1$, $R_{1A}$, ... $R_{1N}$) und dem Widerstand ($R_T$) des Wandlers abgegriffenen Spannung ($N_0$, $N_1$) empfängt und sowohl im Sperrzustand wie auch im Leitzustand des Transistors diese Spannung mißt, um hieraus die Sättigungsspannung ($V_{CE}$) des Transistors abzuleiten und diese Sättigungsspannung zur Bestimmung der im Bereich des Aufnehmers herrschenden Temperatur zu berücksichtigen.

**6.** Temperaturmeßvorrichtung nach Anspruch 5, dadurch gekennzeichnet, daß sie mindestens zwei Temperaturmeßbereiche besitzt und nur eine Bezugsspannung ($V_{ref}$) verwendet.

**7.** Temperaturmeßvorrichtung nach Anspruch 5 oder 6, dadurch gekennzeichnet, daß sie mehrere Transistoren (T, $T_A$, ... $T_N$) aufweist, die jeweils mit einem der Pull-up-Widerstände ($R_1$, $R_{1A}$, ... $R_{1N}$) so parallel geschaltet sind, daß sie mehrere Temperaturmeßbereiche aufweist und daß sie in der Lage ist, die Sättigungsspannungen ($V_{CE}$) jedes der Transistoren (T, $T_A$, ... $T_N$) zu bestimmen.

## Claims

**1.** Process for measuring temperature with the aid of a negative temperature coefficient sensor (10), the said sensor comprising a variable internal resistor ($R_T$) and being associated with a signal processing stage (11) comprising at least one transistor (T), mounted in parallel with at least one so-called "pull up" resistor ($R_1$, $R_{1A}$, ...$R_{1N}$), a voltage value ($N_0$, $N_1$) tapped at a midpoint between the resistor ($R_T$) and the "pull up" resistors is read on an analog input (12) of an analog/digital converter (13), a process according to which the transistor (T) is controlled in accordance with a so-called square voltage in such a way that the transistor is alternately and regularly in the on position and then in the off position, and the value of the voltage ($N_0$, $N_1$) at the analog input (12) of the converter (13) is measured when the transistor (T) is on and when the transistor is off, the said process being characterized in that it consists in:

- determining the saturation voltage ($V_{CE}$) of the transistor from these two measurements,
- deducing therefrom the value of the corrected voltage ($N_{0corr}$, $N_{1corr}$) and deducing therefrom the temperature prevailing around the sensor (10).

2. Process according to Claim 1, characterized in that it furthermore consists in:

- filtering the value of the saturation voltage ($V_{CE}$) of the transistor before using it to calculate the temperature.

3. Process according to Claim 1 or 2, characterized in that it consists in:

- continuously determining the saturation voltage ($V_{CE}$) of the transistor.

4. Process according to Claim 3, characterized in that it consists in monitoring the movements in the saturation voltage of the transistor, throughout the duration of operation of this transistor.

5. Device for measuring temperature implementing the process according to one of Claims 1 to 4 and having a negative temperature coefficient temperature sensor (10), the said device comprising:

- at least two resistors in series ($R_1$, $R_{1A}$, ...$R_{1N}$) with the resistor ($R_T$) of the sensor,
- a transistor (T) placed in parallel with one of the two resistors, in such a way that when the transistor is off the two resistors are in series with the resistor of the sensor, and when the transistor is on, one only of the two resistors is in series with the resistor of the sensor and,
- the converter (13), receiving on its analog input (12) the value of the voltage ($N_0$, $N_1$) tapped off between the resistors ($R_1$, $R_{1A}$, ... $R_{1N}$) and the resistor ($R_T$) of the sensor, the said converter being adapted for measuring this voltage when the transistor is off and when the transistor is on, so as to deduce therefrom the saturation voltage ($V_{CE}$) of the transistor and so as to take this saturation voltage into account in determining the temperature prevailing around the said sensor.

6. Device for measuring temperature according to Claim 5, characterized in that it exhibits at least two temperature measurement ranges and uses a single reference voltage (Vref).

7. Device according to Claim 5 or 6, characterized in that it comprises a plurality of transistors (T, $T_A$, ...$T_N$) each placed in parallel with one of the resistors ($R_1$, $R_{1A}$, ...$R_{1N}$) of the plurality of "pull up" resistors, in such a way that it comprises a plurality of temperature measurement ranges and that it is adapted for determining the saturation voltages ($V_{CE}$) of each of the said transistors (T, $T_A$, ...$T_N$).

Figure 1

Figure 2